# EUROPEAN PATENT SPECIFICATION

(11) **EP 1 676 395 B1**
(45) Date of publication and mention of the grant of the patent: **24.03.2010**
(21) Application number: 04770225.3
(22) Date of filing: 12.10.2004
(51) Int. Cl.: H04L 9/08, G06F 1/00, G11B 7/007

(54) **OPTICAL DISC, OPTICAL DISC PLAYER AND METHOD FOR PLAYING AN OPTICAL DISC TOGETHER WITH AN AUTHENTIFICATION OF DOWNLOADED CONTENT**
OPTISCHER DATENTRÄGER, PLAYER FÜR OPTISCHE DATENTRÄGER UND VERFAHREN ZUM ABSPIELEN EINES OPTISCHEN DATENTRÄGERS ZUSAMMEN MIT EINER AUTHENTIFIKATION HERUNTERGELADENEN INHALTS
DISQUE OPTIQUE, LECTEUR DE DISQUE OPTIQUE ET PROCEDE DE LECTURE D'UN DISQUE OPTIQUE CONJOINTEMENT AVEC UNE AUTHENTIFICATION DU CONTENU TELECHARGE

(30) Priority: 13.10.2003 CN 200310101590
(43) Date of publication of application: 05.07.2006
(73) Proprietor: Koninklijke Philips Electronics N.V., 5621 BA Eindhoven (NL)
(72) Inventor: PENG, Yang Philips Electronics China, Shanghai 200070 (CN); HE, Dahua Philips Electronics China, Shanghai 200070 (CN); KELLY, Declan Patrick Philips Electronics China, Shanghai 200070 (CN); NEWTON, Philip Steven Philips Electronics China, Shanghai 200070 (CN); JIN, Sheng Philips Electronics China, Shanghai 200070 (CN)
(74) Representative: Uittenbogaard, Frank
(86) International application number: PCT/IB2004/052053
(87) International publication number: WO 2005/036812

(56) References cited:
- EP-A1- 1 158 417
- EP-A2- 1 267 244
- WO-A1-02/084496
- WO-A1-2004/055807
- US-A1- 2003 072 453
- US-A1- 2003 142 827
- US-B1- 6 351 536

## Description

### BACKGROUND OF THE INVENTION

The present invention relates to the use of an optical disc, an optical disc player and method for playing an optical disc.

With the rapid development of optical disc and disc playing technology, more and more contents are stored in web sever s, so as to be downloaded to the player during playing a disc thereby cooperate with the player for playing the disc.

The downloaded content may be applications, audio, advertisement, games, cartoon and caption. Wherein the applications are the applications in JAVA or other languages, and compared with other languages, applications in JAVA are more versatile for the platform independence of the language. JAVA applications can be used to control the playing of various players, and storing it on the web sever will provide various player manufacturers with broader business platforms, and provide user with more flexible applications.

The method of storing the above content s on a web sever and then downloading it to a player to cooperate with the player for playing disc is used in many discs and corresponding players, e. g. Blue-ray Disc and corresponding player,e-DVD (enhanced DVD) and corresponding player.

Presently, the scope of content downloadable from the web is determined by the URLs (Uniform Resource Locator) list (Walled Garden) stored on the disc. If the URLs corresponding to the downloaded content are not in the URLs list stored on the disc, executing of the downloaded content will be rejected.

However, the contents corresponding to the URLs list stored on the disc are only confirmed by the content provider to be providable to the users, that is, the contents are stored in the web sever directly without authentication. Authentication means that when the optical disc contents provider stores the content corresponding to the optical disc in a web server, the optical disc contents provider itself or other CA (Certificate Authority, e. g. Internet Explorer of Microsoft and Navigator of Netscape, etc. ) confirm that the content is providable to the users and has been added with a Private key. Said Private key is a digital information no less than 500 bits.

If above contents stored on the web by disc content provider is not authenticated, the content could be easily modified by others (e. g. a hacker, pirate or advertising agency), with the URLs still corresponding to the URLs listed in the URLs list stored on the disc, thereby enabling the player to play the downloaded contents, which is quite possible to cause damage to the player and the contents on the disc, resulting in great trouble to the user.

It is also possible that the user inputs new URLs according to his need or the system pop-up unknown URLs (e. g. provided by a hacker, pirate and advertising agency) during playing. If these URLs are in accordance with the URLs list stored on the disc, thereby played by the player, same damage may also be resulted.

In addition, if the content provider or a third party authenticated by the content provider provide new entertainment contents to the user, and the URLs corresponding to the content is not in the URLs list stored on the disc, the player will still reject to play the downloaded content, even if the downloaded content is needed by the user, and will not cause damage to the disc, the player, or the contents of the disc. This will decrease the entertainment scope of the user, and limit the business modes of the content provider.

Accordingly, there exists a need for an improved optical disc, a player for playing the disc, and a method for playing the disc to avoid above defects.

WO02/084496 A1 discloses an apparatus and method for authentication of a computer-readable medium which provides advantages of automating the authentication process, and further provides redundancy in processes that may be used by a customer for authentication. It enables downloading of files and/or licenses from a central server, and the local use of an authentication program running on the client, who reduces communications and processing demands on the server. Further advantages include the flexibility to customize the authentication approach by varying the local criteria checked during authentication. Accordingly, downloading and further copying and distribution of software or content is effectively controlled, making piracy and other unauthorized copying more difficult.

US 2003/0072453 A1 discloses a method of making available additional content related to basic content in a secure way. The basic content is distributed on a record carrier, and is protected by a security mechanism employing at least one secret. For instance, the DVD Content Scrambling System (CSS) can be used with secrets like the ACC, the Title Key and the Disc Key. Additional content is available on a server and can be downloaded by a rendering device. The additional content is protected by the same security mechanism as the basic content, employing at least one of the same secrets used to protect the basic content. This way, the rendering device only has access to the additional content after successful authentication with a DVD drive, since otherwise it cannot learn the secret required to access the additional content.

EP 1267244 A2 discloses a method of transferring information from a content supplier from one or more databases, such information including program(s), audio, still, video, data files (for example lists, spreadsheets, reports, documents, presentation graphics, sales information), or combinations thereof to a location that uses an authorizing hybrid disc that permits the use of such transferred information, comprising the steps of: providing an authorizing hybrid optical disc having a ROM portion and a RAM portion; providing the ROM portion to include a preformed identification signature which is impressed into the ROM portion of the disc and is arranged to be difficult for a pirate to copy; providing the RAM portion which includes user-specific encrypted information which makes the optical disc unique for a specific user and in combination with the ROM preformed identification signature provides a user-personalized secure signature; the content supplier encrypting information for each user using the user-personalized secure signature and downloading selected encrypted information to the particular user's memory location; and a particular user using the user-personalized secure signature to decode such downloaded selected encrypted information each time the user desires to access such information so that after use only the encoded encrypted information remains in the user memory location.

US 2003/0142827 A1 discloses a contents reproducing unit which receives a reproduction permission authenticating key from a contents downloading server and encrypts encrypted musical data recorded in a CD-ROM by using the reproduction permission authenticating key.

### SUMMARY OF THE INVENTION

The present invention provides an optical disc player for playing an optical disc with a Public Key as defined in claim 1.

The present invention further provides a method for playing an optical disc with a Public Key as defined in claim 5.

The present invention further provides a use of an optical disc as defined in claim 11 in a method as defined in claim 5.

The technical problem to be solved by the invention is achieved through the following technical scheme: said optical disc of the invention is used to cooperate with the downloaded content for playing. The optical disc has a Public Key that is used to confirm that the downloaded contents are authenticated.

The optical disc player of the invention comprises a read means, a web interface, and an authentication module, wherein the read means is used to read the contents and the Public Key; the web interface is used to receive the downloaded relative contents ; and the authentication module is used to confirm that the downloaded contents are authenticated.

The method of the invention for playing a disc is to perform authentication to downloaded contents based on the read Public Key after reading out the content and the Public Key of an optical disc and downloaded the contents, so as to confirm that the downloaded contents are authenticated.

With this technical scheme of the invention, the optical disc, the optical disc player, and the playing method determine whether the downloaded content should be played by checking whether the downloaded contents are authenticated. Accordingly, no matter how the URLs change, the corresponding contents are playable as long as authenticated. When the downloaded contents are not authenticated, they will be rejected to play even when the corresponding URLs are in accordance with the URLs stored on the disc, thereby avoiding influence caused by playing information with virus, and also improve the interest of users' watching disc.

### BRIEF DESCRIPTION OF THE DRAWINGS

Fig.1 is a schematic diagram illustrating the optical disc and the relationship between relevant elements according to a n embodiment of the present invention;
Fig.2 is a schematic diagram illustrating the structure of the disc of Fig.1;
Fig.3 is a schematic diagram illustrating the structure of the pla yer of Fig.1;
Fig.4 is a flowchart of the method for playing the disc according to a n embodiment of the present invention.

Now the present invention will be described in more details with reference to the accompanied drawings.

### PREFERED EMBODIMENTS

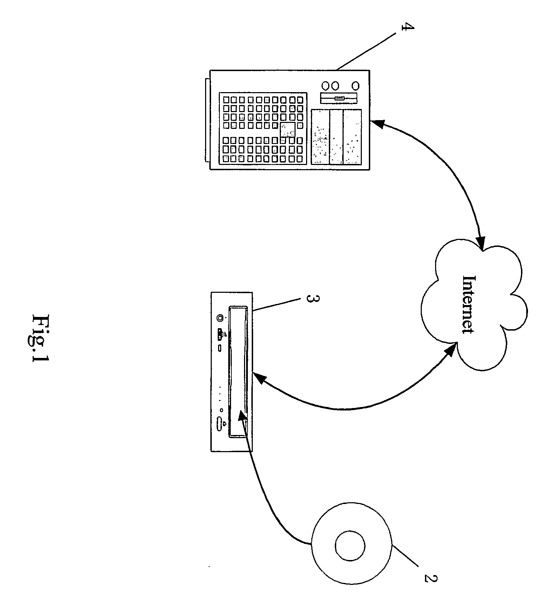

An embodiment of the present invention is shown in Fig.1. In this embodiment, a player 3 is used to play an optical disc 2, and the player 3 is linked to a web server 4 to download contents from the web server 4 during playing, so as to cooperate with the existing content on the optical disc 2 to play the optical disc 2.

The downloaded contents may be applications, audio, advertisement, games, cartoon and caption. Wherein the applications are applications in JAVA or other languages, and compared with other languages, applications in JAVA are more versatile for the platform independence of the language. JAVA applications can be used to control the playing of various players, and storing it on the web sever will provide various player manufacturers with broader business platforms, and provide user with more flexible application s.

Moreover, the downloaded contents are all authenticated. That is, when the optical disc content provider stores the contents corresponding to the optical disc on a web server, the optical disc contents provider itself or other CA (Certificate Authority, e.g. Internet Explorer of Microsoft and Navigator of Netscape, etc.) confirm that the contents are provid able to the users and has been added with a Private key. Said Private key is a digital information no less than 500 bits. Due to the presence of the Private key, the downloaded contents are not easy to be modified by others on the web.

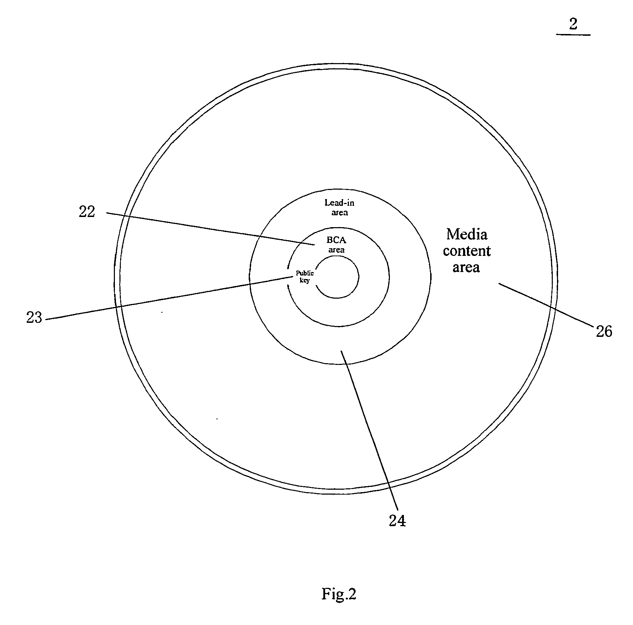

Fig.2 is a schematic diagram illustrating the structure of the optical disc 2 in accordance with an embodime nt of the present invention. The optical disc 2 comprises a BCAs (Burst Cutting Areas) 22, Lead -in Area 24 and Media Content Areas 26. Wherein the BCAs 22 includes a Public key 23, which is used to verify that the downloaded contents are authenticated when playing the optical disc 2. The BCAs 22 corresponds to the Private key of the downloaded contents, and is a digital information no less than 500 bit.

Wherein the authentication is carried out by the unsymmetrical algorithm, in which digital information is obtained through operation of the Private key of the downloaded contents and the Public key of the optical disc 2 (which will be described in detail herein after).

The Public key 23 shown in Fig.2 is located in the BCAs 22 of optical disc 2, but it is only an example, and it may be located in other areas of the optical disc 2, e.g. the led-in Area 24 and Media Content Areas 26, etc. Moreover, only one Public key 23 is shown in Fig.2, in fact, there may be a plurality of Public key 23 directed to different contents on the total optical disc 2. The Public key 23 of the optical disc 2 may also be used to be sent to the web server 4 to obtain the authority for playing the optical disc 2.

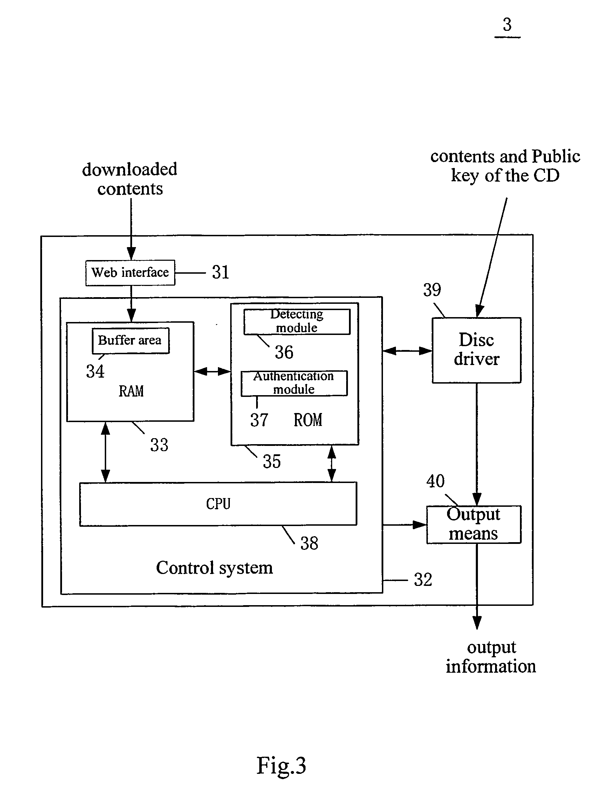

An optical disc player 3 according to a n embodiment of the present inventi on is shown in fig.3. The optical disc player 3 comprises a web interface 31, a control system 32, a driver 39, and an output means 40.

Wherein, the control system 32 is used to control the operation of the disc driver 39 and the output means 40, and comprises RAM 33, ROM 35 and CPU 38. RAM 33 comprises a buffer area 34 for buffering downloaded contents transferred via the web interface 31. ROM 35 comprises a detecting module 36 and an authentication module 37. The ROM 35 is linked with RAM 33 to receive th e downloaded contents from RAM 33.

CPU 38 is linked with RAM 33 and ROM 35, and controls the operation of RAM 33 and ROM 35. Under the control of the control system 32, the disc driver 39 reads the media content and Public Key 23 from disc 2, transfers the Public Key 32 to ROM 36 of the control system 32, and transfers the media contents to output means 40.

The detecting module 36 in the control system 32 is used to determine whether the downloaded contents transferred from the buffer 34 are integral. If not integral, then give up playing the downloaded content s. If it is integral, the authentication module 37 verifies that the downloaded contents are authenticated. The verification is carried out using currently perfect Public Key System Algorithm and proto cols. For example, the verification result can be obtained by the operation relationship between the digital in the Private key of the downloaded content s and the digital in the Public Key from the disc driver 39. Take as a simple example, the relationship between the Public key 23 of the disc 2 and the Private key of the downloaded contents is Y=B^{X}, wherein the Public key 23 includes digital Y and B, and the Private key of the downloaded contents includes X. The authentication module 37 computes the result of B^{X}, and if the result is Y, the downloaded contents pass verification, and the downloaded contents are considered to be authenticated and can be played. If the result is not Y, the downloaded content s do not pass verification, and the player 3 will reject to play the downloaded content s. The output means is used to output the information read by the disc driver and the information output from the control system. The functions of the above elements are all implemented under the cooperation of CPU 34.

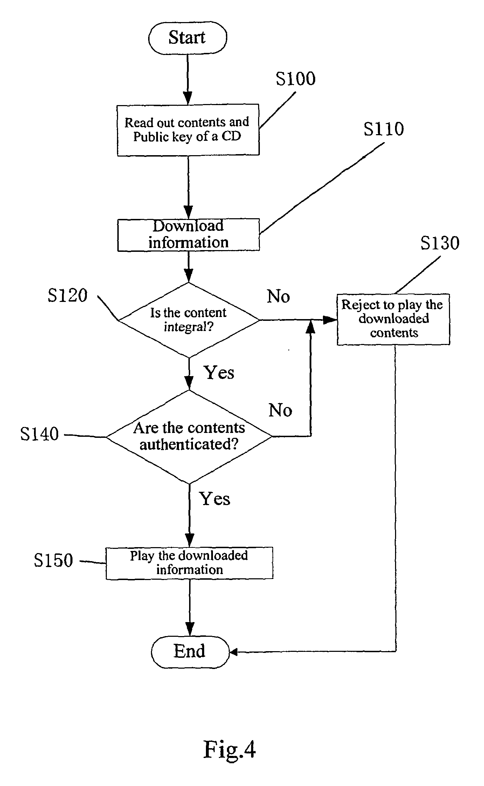

Fig.4 is a flowchart of the method for playing an optical disc according to an embodiment of the present invention. After reading the contents and the public key of the disc (S100), the player 3 downloads the contents corresponding to the optical disc contents from web server (S110).

Next, the integrity of the downloaded contents is checked (S120) to determine whether the downloaded contents are integral. If the content is not integral, the downloaded content will be rejected to play (S130).

If the content is integral, the Public key 23 will be used to determine whether the downloaded contents are authenticated (S140). If not authenticated, the downloaded contents will be rejected to play (S130); if authenticated, the downloaded contents will be played directly (S150), thereby co-operating with the information stored on the disc 2 to play the disc 2.

With the technical scheme of the present invention, the optical disc, the player, and the method of playing the disc determine whether to play the downloaded contents by detecting whether the contents are authenticated. Therefore, no matter how URLs change, the downloaded contents can be played as long as they are authenticated. But if the downloaded contents are not authenticated, it will be rejected to play even if the URLs corresponding to the downloaded content s correspond to the URLs stored on the optical disc, thus, the influence caused by playing information with virus may be avoided, and the interest of users' watching disc is improved.

## Claims

1. An optical disk player (3), comprising:
a reading-out means (39) for reading-out content and a public key of an optical disk (2);
a network interface (31) for receiving downloaded content for use in cooperation with the content stored on the optical disk (2) during play-back;
a verifying means (37) for verifying whether the downloaded content is authenticated according to a public key system using a public key and a private key, using said public key (23) read-out from the optical disk (2) for said verification; and
output means (40) for playing back the downloaded content only if it has been verified that the downloaded content is authenticated.

2. The optical disk player according to claim 1, further comprising:
a detecting means (36) for detecting the integrality of the downloaded content, wherein said verification will not be executed if the detected content is not integral.

3. The optical disk player according to claim 1, wherein the downloaded content is an application program.

4. The optical disk player according to claim 3, wherein the downloaded application program is the JAVA language application program.

5. A playing method, comprising:
reading-out (S 100) content and a public key of an optical disk (2);
downloading (S110) content for use in cooperation with the content stored on the optical disk (2) during play-back;
verifying (S 140) whether the downloaded content is authenticated according to a public key system using a public key and a private key, using said public key (23) read-out from the optical disk (2) for said verification; and
playing back the downloaded content only if it has been verified that the downloaded content is authenticated.

6. The playing method according to claim 5, further comprising:
detecting (S120) the integrality of the downloaded content to confirm whether the downloaded content is integral, wherein said verification step (S 140) will not be executed if the content is not integral and wherein said verification step will be executed if the detected content is integral.

7. The playing method according to claim 5 or 6, wherein the downloaded content will be refused to operate if the verified downloaded content is not authenticated.

8. The playing method according to claim 7, wherein the downloaded content will be operated if the verified downloaded content is authenticated.

9. The playing method according to claim 5, wherein the downloaded content is an application program.

10. The playing method according to claim 9, wherein the downloaded application program is the JAVA language application program.

11. Use of an optical disk (2) in a playing method as claimed in claim 5, said optical disk being used to play in coordination with downloaded content and comprising content for being played back; and
a public key (23) which is used to verify whether the downloaded content is authenticated according to a public key system using a public key and a private key,
wherein said public key is provided for being used for said verification and wherein the downloaded content is only played back if it has been verified that the downloaded content is authenticated.

12. Use of the optical disk according to claim 11, wherein the public key being stored in the BCAs zone (22) of the optical disk (2).

13. Use of the optical disk according to claim 12, wherein the public key being stored in the media content zone (26) of this optical disk (2).

## Patentansprüche

1. Abspielgerät (3) für optische Datenträger, mit:
einem Auslesemittel (39) zum Auslesen eines Inhalts sowie eines Public Key aus einem optischen Datenträger (2);
einer Netzwerk-Schnittstelle (31) zum Empfang von heruntergeladenen Inhalten zur Verwendung in Zusammenwirkung mit dem auf dem optischen Datenträger (2) gespeicherten Inhalt bei Abspielen;
einem Verifizierungsmittel (37), um zu verifizieren, ob der heruntergeladene Inhalt gemäß einem Public Key System unter Einsatz eines Public Key und eines Private Key authentifiziert ist, wobei der aus dem optischen Datenträger (2) ausgelesene Public Key (23) für die Verifizierung verwendet wird; sowie
Ausgabemitteln (40), um den heruntergeladenen Inhalt nur abzuspielen, wenn verifiziert wurde, dass der heruntergeladene Inhalt authentifiziert ist.

2. Abspielgerät für optische Datenträger nach Anspruch 1, welches weiterhin umfasst:
ein Detektormittel (36) zum Ermitteln der Integralität des heruntergeladenen Inhalts, wobei die Verifizierung nicht ausgeführt wird, wenn der ermittelte Inhalt nicht integral ist.

3. Abspielgerät für optische Datenträger nach Anspruch 1, wobei der heruntergeladene Inhalt ein Anwenderprogramm ist.

4. Abspielgerät für optische Datenträger nach Anspruch 3, wobei das heruntergeladene Anwenderprogramm das JAVA-Anwenderprogramm ist.

5. Abspielverfahren, welches die folgenden Schritte umfasst.
Auslesen (S100) eines Inhalts und eines Public Key aus einem optischen Datenträger (2);
Herunterladen (S110) des Inhalts zur Verwendung in Zusammenwirkung mit dem auf dem optischen Datenträger (2) gespeicherten Inhalt bei Abspielen;
Verifizieren (S140), ob der heruntergeladene Inhalt gemäß einem Public Key System unter Verwendung eines Public Key und eines Private Key authentifiziert ist, wobei der aus dem optischen Datenträger (2) ausgelesene Public Key (23) für die Verifizierung verwendet wird; sowie
Abspielen des heruntergeladenen Inhalts nur dann, wenn verifiziert wurde, dass der heruntergeladene Inhalt authentifiziert ist.

6. Abspielverfahren nach Anspruch 5, welches weiterhin den Schritt des
Ermittelns (S 120) der Integralität des heruntergeladenen Inhalts umfasst, um zu bestätigen, ob der heruntergeladene Inhalt integral ist, wobei der Verifizierungsschritt (S140) nicht ausgeführt wird, wenn der Inhalt nicht integral ist, und wobei der Verifizierungsschritt ausgeführt wird, wenn der ermittelte Inhalt integral ist.

7. Abspielverfahren nach Anspruch 5 oder 6, wobei ein Abspielen des heruntergeladenen Inhalts abgelehnt wird, wenn der verifizierte, heruntergeladene Inhalt nicht authentifiziert ist.

8. Abspielverfahren nach Anspruch 7, wobei der heruntergeladene Inhalt abgespielt wird, wenn der verifizierte, heruntergeladene Inhalt authentifiziert ist.

9. Abspielverfahren nach Anspruch 5, wobei der heruntergeladene Inhalt ein Anwenderprogramm ist.

10. Abspielverfahren nach Anspruch 9, wobei das heruntergeladene Anwenderprogramm ein JAVA-Anwenderprogramm ist.

11. Verwendung eines optischen Datenträgers (2) in einem Abspielverfahren nach Anspruch 5, wobei der optische Datenträger zum Abspielen in Koordination mit dem heruntergeladenen Inhalt verwendet wird und einen Inhalt zur Wiedergabe desselben sowie einen Public Key (23) umfasst, der eingesetzt wird, um zu verifizieren, ob der heruntergeladene Inhalt gemäß einem Public Key System unter Verwendung eines Public Key und eines Private Key verifiziert ist,
wobei der Public Key zur Verwendung für die Verifizierung vorgesehen ist, und wobei der heruntergeladene Inhalt nur abgespielt wird, wenn verifiziert wurde, dass der heruntergeladene Inhalt authentifiziert ist.

12. Verwendung des optischen Datenträgers nach Anspruch 11, wobei der Public Key in dem BCA-Bereich (22) des optischen Datenträgers gespeichert wird.

13. Verwendung des optischen Datenträgers nach Anspruch 12, wobei der Public Key in dem Datenträgerinhaltbereich (26) dieses optischen Datenträgers (2) gespeichert ist.

## Revendications

1. Lecteur de disque optique (3) comprenant :
des moyens de lecture (39) servant à lire le contenu et une clé publique d'un disque optique (2) ;
une interface réseau (31) servant à recevoir le contenu téléchargé pour être utilisé en coopération avec le contenu qui est stocké sur le disque optique (2) lors de la reproduction ; des moyens de vérification (37) servant à vérifier si le contenu téléchargé est authentifié selon un système de clé publique à l'aide d'une clé publique et d'une clé privée en utilisant ladite clé publique (23) qui est lue à partir du disque optique (2) pour ladite vérification ; et
des moyens de sortie (40) servant à reproduire le contenu téléchargé seulement s'il a été vérifié que le contenu téléchargé est authentifié.

2. Lecteur de disque optique selon la revendication 1, comprenant en outre :
des moyens de détection (36) servant à détecter l'intégralité du contenu téléchargé, dans lequel ladite vérification ne sera pas exécutée si le contenu détecté n'est pas intégral.

3. Lecteur de disque optique selon la revendication 1, dans lequel le contenu téléchargé est un programme d'application.

4. Lecteur de disque optique selon la revendication 3, dans lequel le programme d'application téléchargé est le programme d'application du langage de programmation JAVA.

5. Procédé de lecture comprenant les étapes suivantes consistant à :
lire (S100) un contenu et une clé publique d'un disque optique (2) ;
télécharger (S110) un contenu pour être utilisé en coopération avec le contenu qui est stocké sur le disque optique (2) lors de la reproduction ;
vérifier (S140) si le contenu téléchargé est authentifié selon un système de clé publique à l'aide d'une clé publique et d'une clé privée en utilisant ladite clé publique (23) qui est lue à partir du disque optique (2) pour ladite vérification ; et
reproduire le contenu téléchargé seulement s'il a été vérifié que le contenu téléchargé est authentifié.

6. Procédé de lecture selon la revendication 5, comprenant en outre l'étape suivante consistant à :
détecter (S 120) l'intégralité du contenu téléchargé de manière à confirmer si le contenu téléchargé est intégral, dans lequel ladite étape de vérification (S 140) ne sera pas exécutée si le contenu n'est pas intégral et dans lequel ladite étape de vérification sera exécutée si le contenu détecté est intégral.

7. Procédé de lecture selon la revendication 5 ou selon la revendication 6, dans lequel le contenu téléchargé sera refusé d'être exploité si le contenu téléchargé vérifié n'est pas authentifié.

8. Procédé de lecture selon la revendication 7, dans lequel le contenu téléchargé sera exploité si le contenu téléchargé vérifié est authentifié.

9. Procédé de lecture selon la revendication 5, dans lequel le contenu téléchargé est un programme d'application.

10. Procédé de lecture selon la revendication 9, dans lequel le programme d'application téléchargé est le programme d'application du langage de programmation JAVA.

11. Utilisation d'un disque optique (2) dans un procédé de lecture selon la revendication 5, ledit disque optique étant utilisé pour lire en coordination avec le contenu téléchargé et comprenant le contenu pour être reproduit ; et
une clé publique (23) qui est utilisée pour vérifier si le contenu téléchargé est authentifié selon un système de clé publique à l'aide d'une clé publique et d'une clé privée, dans lequel ladite clé publique est prévue pour être utilisée pour ladite vérification et dans lequel le contenu téléchargé est seulement reproduit s'il a été vérifié que le contenu téléchargé est authentifié.

12. Utilisation du disque optique selon la revendication 11, dans lequel la clé publique est stockée dans la zone BCAs (22) du disque optique (2).

13. Utilisation du disque optique selon la revendication 12, dans lequel la clé publique est stockée dans la zone de contenu média (26) de ce disque optique (2).
